# EUROPÄISCHE PATENTSCHRIFT

(11) **EP 1 049 610 B1**
(45) Veröffentlichungstag und Bekanntmachung des Hinweises auf die Patenterteilung: **21.07.2004**
(21) Anmeldenummer: 99952280.8
(22) Anmeldetag: 04.08.1999
(51) Int. Cl.: B60S 1/40, B60S 1/38

(54) **VORRICHTUNG ZUM VERBINDEN EINES WISCHBLATTS MIT EINEM WISCHERARM**
DEVICE FOR CONNECTING A WIPER BLADE TO A WIPER ARM
DISPOSITIF POUR RELIER UNE RACLETTE D'ESSUIE-GLACE A UN BRAS D'ESSUIE-GLACE

(30) Priorität: 27.08.1998 DE 19838883
(43) Veröffentlichungstag der Anmeldung: 08.11.2000
(73) Patentinhaber: ROBERT BOSCH GMBH, 70442 Stuttgart (DE)
(72) Erfinder: KOTLARSKI, Thomas, D-53474 Bad Neuenahr (DE)
(86) Internationale Anmeldenummer: PCT/DE1999/002422
(87) Internationale Veröffentlichungsnummer: WO 2000/012360

(56) Entgegenhaltungen:
- DE-U- 29 712 293
- US-A- 3 872 537
- US-A- 4 120 069

## Beschreibung

### Stand der Technik

Die Erfindung geht aus von einer Vorrichtung nach der Gattung des Anspruchs 1. Bei einer bekannten Vorrichtung dieser Art (DE-0S 23 44 876) greifen die blattseitigen Gelenkzapfen nach der Montage des Wischblatts am Wischerarm in armseitige Aufnahmelöcher. Eine Aussage zum Montagevorgang wird dort nicht gemacht. Möglicherweise sind die beiden Zapfen durch die aus dem Block des Halters herausragenden Enden eines Bolzens gebildet, welcher nach dem Zusammenstecken der Anschlußteile eingesetzt wird, so daß die Bolzenenden in den armseitigen Löchern liegen. Eine derartige Verbindung erfordert einen erheblichen Montageaufwand sowohl bei der Erstmontage des Wischblatts am Wischerarm als auch beim später erforderlichen Wischblattaustausch.

### Vorteile der Erfindung

Bei der erfindungsgemäßen Vorrichtung mit den kennzeichnenden Merkmalen des Anspruchs 1 können die Gelenkzapfen entgegen der Federkraft vollständig in das Anschlußstück hineinbewegt werden, so daß eine montagegerechte Positionierung des Wischblatts bezüglich des Wischerarms möglich ist. Nach dem Freigeben der Gelenkzapfen gelangen diese mit Hilfe der Federkraft wieder in ihre Ausgangspositionen wobei sie in die Lagerausnehmungen des zum Wischerarm gehörenden Verbindungselements gelangen. Zur Demontage des Wischblatts vom Wischerarm genügt es die beiden Gelenkzapfen wieder gegen die Federkraft soweit zusammenzudrücken, daß sie aus ihren Lagerausnehmungen heraustreten. Besondere lose Elemente wie zum Beispiel separate Gelenkbolzen und die damit verbundenen Montageschritte können somit entfallen.

In Weiterbildung des Erfindungsgedankens ist jeder Gelenkzapfen längsgeteilt wobei das eine Zapfenteil eines jeden Gelenkzapfens fest mit dem Anschlußstück verbunden ist, das andere Zapfenteil eines jeden Gelenkzapfens gegen Federkraft zumindest jeweils um das Maß der wirksamen Zapfenlänge zum anderen Gelenkzapfen hin bewegbar ist und jedes anschlußstückfeste Gelenkzapfenteil über einen randoffenen, in die im zugeordnete Lagerausnehmung mündenden Montagekanal einbringbar ist wobei die Breite des Montagekanals auf die Breite des jeweiligen einen Gelenkzapfenteils abgestimmt ist. Dadurch wird das Anschließen des Wischblatts an den Wischerarm beziehungsweise das Abnehmen des Wischblatts vom Wischerarm weiter vereinfacht, weil das anschlußstückfeste Gelenkzapfenteil schon eine gute Positionierung des Wischblatts am Wischerarm bewirkt, so daß das bewegbare Gelenkzapfenteil praktisch selbsttätig und unter Wirkung der Federkraft seine Betriebsstellung in seiner Lagerausnehmung findet.

Im Hinblick auf die Betriebssicherheit des Wischblatts am Wischerarm ist es von Vorteil, wenn bei in Betriebsstellung befindlichem Wischerarm die zwischen dem einen Gelenkzapfenteilen und den anderen Gelenkzapfenteilen vorhandenen Trennfugen zur Scheibe aufrecht angeordnet sind.

Eine besonders montagefreundliche Anschlußvorrichtung ergibt sich, wenn die Trennfugen außerhalb der Gelenkzapfen-Längsachsen angeordnet sind, die im Querschnitt größeren Gelenkzapfenteile fest mit dem Anschlußstück verbunden und die im Querschnitt kleineren Gelenkzapfenteile zumindest annähernd in Richtung der Zapfen-Längsachsen federnd nachgiebig angeordnet sind, weil die größeren Gelenkzapfenteile eine bessere Vorpositionierung des Wischblatts zum Wischerarm bewirken.

Im Hinblick auf die Handhabung der Verbindungsvorrichtung ist mit Vorteil das Anschlußstück aus einem federelastischen Kunststoff gefertigt, wobei an dem - bei am Wischerarm angeschlossenen Wischblatt - vom Wischerarm abliegenden Ende eines zum Anschlußstück gehörenden, die im Querschnitt größeren Gelenkzapfenteile aufweisenden Basisteil die Federmittel angeordnet sind.

In weiterer Ausgestaltung der Erfindung sind die Federmittel für jedes der kleineren Gelenkzapfenteile durch je einen haarnadelförmigen Fortsatz des Anschlußstücks gebildet wobei die beiden Fortsätze in einer gemeinsamen, mit Abstand von der Scheibe und annähernd parallel zu dieser befindlichen Ebene liegen, die einander benachbarten inneren Haarnadelschenkel der beiden Fortsätze mit ihren von dem jeweiligen Haarnadel-Scheitelbereich abliegenden Enden fest mit dem Ende des Basisteils des Anschlußstücks verbunden sind und die im Querschnitt kleineren Gelenkzapfenteile jeweils an einem der beiden gegen Federkraft frei bewegbaren äußeren Haarnadelschenkeln der beiden Fortsätze angeordnet sind. Die äußeren Haarnadelschenkel der einstückig mit dem Anschlußstück verbundenen Fortsätze bestehen somit auch aus einem federelastischen Kunststoff und bilden Handhaben zum vorübergehenden Auslenken der kleinen Gelenkzapfenteile um das Maß der wirksamen Zapfenlänge. Ihre Anördnung an den freiliegenden Seiten des Anschlußstücks gewährleistet eine montagefreundliche Zugänglichkeit.

Damit das Wischblatt bei der quer zu seiner Längserstreckung erfolgenden Wischbewegung gut am Wischerarm geführt ist, hat das Vorrichtungselement des Wischerarms einen U-förmigen Querschnitt, dessen U-Basis bei angeschlossenem Wischblatt sich auf der von der Scheibe abgewandten Seite des Anschlußstücks befindet und die beiden U-Schenkel des Vorrichtungselements die beiden Längsseiten des Wischblatt-Anschlußstücks passend übergreifen, wobei jeder U-Schenkel eine Lagerausnehmung für einen Gelenkzapfen hat.

Eine Verbesserung der Betriebssicherheit ergibt sich, wenn der Montagekanal einer jeden Lagerausnehmung zur Scheibe hin offen ist, weil das Wischblatt nur bei von der Scheibe abgehobenem Wischerarm von diesem abgenommen werden kann.

Die Betriebssicherheit wird dadurch weiter erhöht, daß bei angeschlossenem Wischblatt die jeweils von Wischerarm abliegenden Lagerausnehmungswände die Gelenkzapfen hakenartig untergreifen.

Eine besonders niedrige, kompakte Bauhöhe der Anschlußvorrichtung ergibt sich dadurch, daß die U-Basis des Vorrichtungselements mit einer seitlichen, im Querschnittl L-förmigen Verbreiterung versehen ist, deren einer L-Schenkel durch eine Fortführung der U-Basis gebildet ist und der andere L-Schenkel mit Abstand von dem einen U-Schenkel des Vorrichtungselements und parallel zu diesem angeordnet ist.

Weitere vorteilhafte Weiterbildungen und Ausgestaltungen der Erfindung sind in der nachfolgenden Beschreibung von in der zugehörenden Zeichnung dargestellten Ausführungsbeispielen angegeben.

### Zeichnung

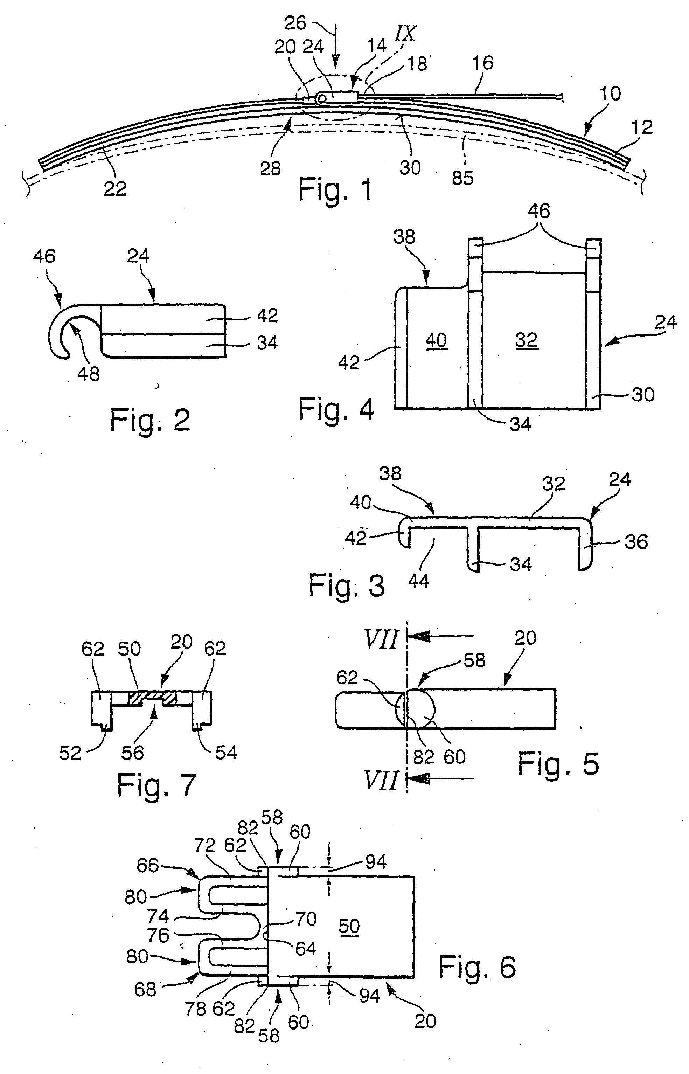

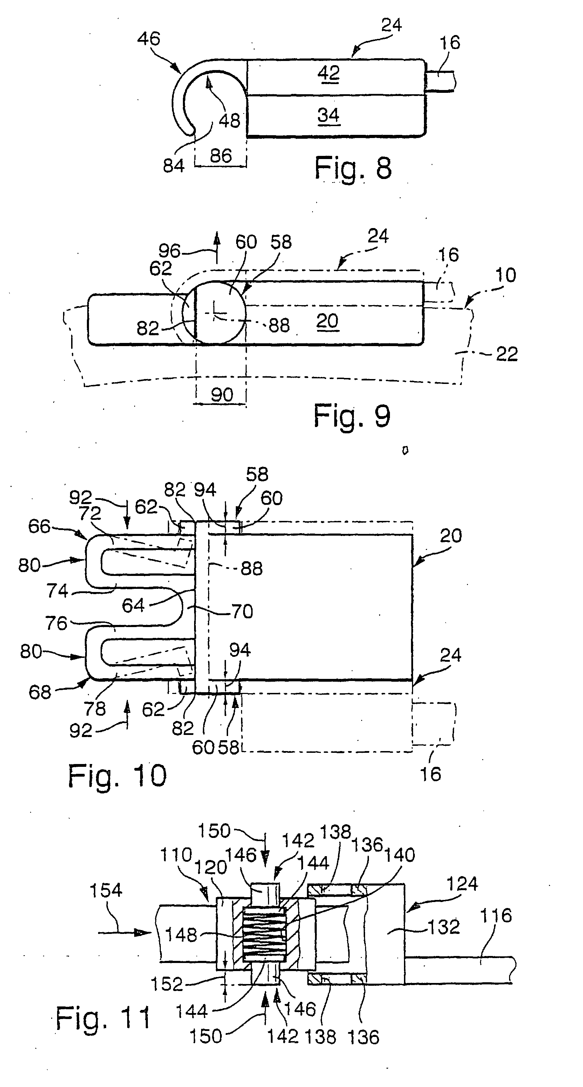

In der Zeichnung zeigen: Figur 1 eine Seitenansicht eines an einem Wischerarm angeschlossenen Wischblatts, Figur 2 eine Seitenansicht des wischerarmseitigen Vorrichtungselements der Anschlußvorrichtung, vergrößert dargestellt, Figur 3 eine Frontansicht des Vorrichtungselements gemäß Figur 2, Figur 4 das Vorrichtungselement gemäß Figur 2 in einer Ansicht von unten gezeichnet, Figur 5 eine Seitenansicht des wischblattseitigen Anschlußstücks der Anschlußvorrichtung, vergrößert dargestellt, Figur 6 eine Draufsicht auf das Anschlußstück gemäß Figur 5, Figur 7 einen Schnitt durch das Anschlußstück entlang der VII-VII in Figur 5, Figur 8 eine Seitenansicht des freien, mit dem Vorrichtungselement versehenen Wischerarmendes, vergrößert dargestellt, Figur 9 eine vergrößerte Seitenansicht des Anschlußstücks mit strichpunktiert angedeutetem Wischblatt sowie der Anordnung gemäß Figur 8 in Betriebsstellung, Figur 10 eine Draufsicht auf die Anordnung gemäß Figur 9 und 11 eine Prinzipdarstellung einer anderen Ausführungsform der erfindungsgemäßen Verbindungsvorrichtung.

### Beschreibung der Ausführungsbeispiele

Ein in Figur 1 dargestelltes Wischblatt 10 weist ein bandartig langgestrecktes, federelastisches Tragelement 12 auf, an dessen von der zu wischenden Scheibe abgewandten Oberseite eine zu einer Anschlußvorrichtung 14 gehörendes, wischblattseitiges Anschlußstück 20 angeordnet ist mit dessen Hilfe das Wischblatt 10 mit einem an der Karosserie eines Kraftfahrzeugs geführten, angetriebenen Wischerarm 16 lösbar verbunden werden kann. Dazu ist dieser an seinem freien Ende 18 mit einem ebenfalls zur Anschlußvorrichtung 14 gehörenden, also wischerarmseitigen Vorrichtungselement 24 versehen. An der der Scheibe zugewandten Unterseite des Tragelements 12 ist eine langgestreckte, gummielastische Wischleiste 22 längsachsenparallel angeordnet. Der Wischerarm 16 und damit auch das mit dem Anschlußstück 20 des Wischblatts 10 zusammenarbeitende, mit dem freien Ende 18 der Anschlußvorrichtung 14 fest verbundene Vorrichtungselement 24 am Armende 18 ist in Richtung des Pfeiles 26 zur zu wischenden Scheibe belastet, deren zu wischende Oberfläche in Figur 1 durch eine strichpunktierte Linie 28 angedeutet ist. Da die strichpunktierte Linie 28 die stärkste Krümmung der Scheibenoberläche darstellen soll ist klar ersichtlich, daß die Krümmung des mit seinen beiden Enden an der Scheibe anliegenden Wischblatts 10 stärker ist als die maximale Scheibenkrümmung (Figur 1). Unter dem Anpressdruck (Pfeil 26) legt sich das Wischblatt mit seiner Wischlippe 30 über seine gesamte Länge an der Scheibenoberläche 26 an. Dabei baut sich im bandartigen, federelastischen Tragelement 12 eine Spannung auf, welche für eine ordnungsgemäße Anlage der Wischleiste 22 beziehungsweise der Wischlippe 30 über deren gesamte Länge an der Kraftfahrzeugscheibe sorgt. Weil die in aller Regel sphärisch gekrümmte Scheibe nicht ein Abschnitt einer Kugeloberfläche darstellt, muß sich das Wischblatt 10 gegenüber dem Wischerarm 16 während seiner Wischbewegung ständig der jeweiligen Lage der Scheibenoberfläche 28 anpassen können. Deshalb ist die Verbindungsvorrichtung 14 gleichzeitig als Gelenkverbindung zwischen Wischblatt und Wischerarm ausgebildet.

Im Folgenden soll nun auf die besondere Ausgestaltung der Verbindungs- oder Anschlußvorrichtung 14 beziehungsweise der zu dieser gehörenden beiden Vorrichtungsteile 20 und 24 näher eingegangen werden. Das mit dem Wischerarm 16 fest verbindbare Vorrichtungselement 24 (Figuren 2 bis 4) hat einen im wesentlichen U-förmigen Querschnitt (Figur 3) und somit eine plattenförmige U-Basis 32, an die sich mit Abstand voneinander liegend zwei U-Schenkel 34 und 36 anschließen. Die U-Basis 32 des Vorrichtungselements 24 ist mit einer seitlichen, im Querschnitt L-förmigen Verbreiterung 38 versehen. Der eine L-Schenkel 40 ist eine Fortführung der U-Basis 32. Mit Abstand vom U-Schenkel 34 schließt sich an den L-Schenkel 40 der andere L-Schenkel 42 an so daß sich ein Aufnahmekanal 44 für das freie Ende 18 des Wischerarms 16 ergibt. Jeder der beiden U-Schenkel 34 und 36 erstreckt sich mit einer Verlängerung 46 über die U-Basis 32 hinaus. Diese Verlängerungen sind hakenartig gekrümmt, wobei deren Innenkonturen jeweils Lageraufnahmen 48 bilden, auf deren Bedeutung später noch eingegangen wird.

Die Ausgestaltung des anderen, wischblattseitigen Teils der Anschlußvorrichtung 14 soll anhand der Figuren 5 bis 7 erläutert werden. Dieses auch als Anschlußstück zu bezeichnende Vorrichtungsteil 20 ist im Mittelbereich des langgestreckten Wischblatts fest mit diesem verbunden. Auch das Anschlußstück 20 hat einen im wesentlichen U-förmigen Querschnitt. Seine U-Basis 52 ist plattenartig ausgebildet (Figur 6) und an ihren Längsseiten mit den beiden mit Abstand voneinander liegenden U-Schenkeln 52 und 54 versehen. Es ergibt sich somit ein Führungskanal 56 zur Aufnahme der mit dem Tragelement 12 versehenen Wischleiste 22, die zusammen mit dem Anschlußstück 20 das Wischblatt 10 bilden. An den voneinander abgewandten Außenseiten der U-Schenkel 52 und 54 ist im Bereich des einen Endes der U-Basis 50 je ein Gelenkzapfen 58 angeordnet. Wie insbesondere Figur 5 zeigt sind die beiden Gelenkzapfen 58 in einer parallel zur Zapfenachse liegenden und auf der Scheibe stehenden Ebene geteilt. Es ergibt sich somit jeweils ein Hauptzapfenteil 60 und ein Ergänzungszapfenteil 62. Die beiden Hauptzapfenteile 60 sind fest an ihren jeweiligen U-Schenkeln 52 beziehungsweise 54 angeordnet. An der den Hauptzapfenteilen 60 benachbarten Stirnseite 64 der plattenartigen U-Basis 50 sind zwei U- oder haarnadelförmige Fortsätze 66, 68 vorhanden (Figur 6), die über ein Mittelstück 70 miteinander verbunden sind. Die Haarnadelschenkel 72, 74, 76, 78 sind in einer gemeinsamen Ebene angeordnet, die bei in Betrieb befindlichem Wischblatt mit Abscand von der zu wischenden Scheibe und annähernd parallel zu dieser liegt. Die Scheitelbereiche 80 der Fortsätze 66, 68 liegen von der U-Basis 50 des Anschlußstücks 20 ab. Während die beiden einander benachbarten Haarnadelschenkel 74 und 76 über das Mittelstück 70 fest mit der U-Basis 50 verbunden sind, sind die beiden von einander abliegenden Haarnadelschenkel 72 und 78 gegenüber der U-Basis 50 frei beweglich. Sie sind an ihren Außenseiten jeweils mit dem Gelenkzapfen-Ergänzungsteil 62 der Gelenkzapfen 58 versehen, die zusammen mit den fest an den Längsseiten des Anschlußstücks 20 angeordneten Hauptzapfenteilen 60 den geschlossenen, kreisförmigen Zapfenquerschnitt ergeben. Bei dieser Aussage ist natürlich die zwischen den zusammengehörigen Zapfenteilen 60, 62 vorhandene Trennfuge 82 außer Betracht gelassen.

Die Montage des Wischblatts 10 an den Wischerarm 16 beziehungsweise an das zum Wischerarm gehörenden mit diesem fest verbundenen Vorrichtungselement 24 wird nun anhand der Figuren 8 bis 10 erläutert. Diese Figuren sind auch zur Erläuterung des Aufbaus der beiden Vorrichtungsteile 20 und 24 der Anschlußvorrichtung 14 hilfreich, weil sie im wesentlichen den Figuren 2, 5 und 6 entsprechen. Figur 8 zeigt, daß die Innenkonturen der,Lageraufnahmen 48 den Wänden einer Lagerbohrung entsprechen, die über einen Montagekanal 84 zur zu wischenden Scheibe 85 (Figur 1) hin offen ist. Weiter zeigt Figur 8, daß die Breite 86 des Montagekanals 84 kleiner ist als der Durchmesser der Lagerbohrung. Aus den Figuren 9 und 10 ist ersichtlich, daß die beiden Gelenkzapfen 58 eine gemeinsame Längsachse 88 haben, daß heißt daß die beiden Gelenkzapfen miteinander fluchten. Schließlich ist aus Figur 9 klar ersichtlich, daß die beiden mit den U-Schenkeln 34 und 36 des Anschlußstücks 20 fest verbundenen Hauptzapfenteile 60 einen größeren Querschnitt aufweisen als die beiden Ergänzungszapfenteile 62, welche an den voneinander abgewandten Außenseiten der beiden äußeren Haarnadelschenkel 72 und 78 sitzen. Die Trennfuge 82 zwischen den beiden sich ergänzenden Zapfenteilen 60 und 62 ist so gelegt, daß sich eine Breite 90 der Hauptzapfenteile 60 ergibt, die so auf die Breite 86 der Montagekanäle 84 abgestimmt ist, daß die Hauptzapfenteile 60 die Montagekanäle 84 ohne die Ergänzungszapfenteile 62 passieren können.

Zum Anschließen des Wischblatts 10, 20 an den Wischerarm 16, 24 werden zunächst die beiden äußeren Haarnadelschenkel 72 und 74 in Richtung der beiden Pfeile 92 belastet, so daß diese zusammen mit ihren Ergänzungszapfenteilen 62 auslenken und etwa in ihre die in Figur 10 strichpunktiert dargestellte Positionen gelangen. Dabei ist es durchaus möglich daß auch die inneren Haarnadelschenkel 74, 76 aufeinander zu ausgelenkt werden. Wenn die Auslenkung eines jeden Ergänzungszapfenteils 62 zumindest so groß ist wie die in den Lageraufnahmen 48 wirksame, tragende Zapfenlänge 94 (Figur 10), ist es möglich das Wischblatt in Richtung des Montagepfeils 96 (Figur 9) an den Wischerarm 16, 24 (Figur 8) anzuschließen. Dabei gelangen die beiden Hauptzapfenteile 60 problemlos durch ihre zur Scheibe 85 hin offenen Montagekanäle 84 in ihre Lageraufnahmen 48. Danach wird die in Richtung der Pfeile 92 (Figur 10) wirkende Belastung aufgehoben, so daß die Haarnadelschenkel 72 und 78 - gegebenenfalls auch die Haarnadelschenkel 74 und 76 - wieder in ihre Ausgangspositionen gelangen. Dabei greifen nun die beiden Ergänzungszapfenteile 62 ebenfalls in die, die wischerarmseitigen Gelenkmittel bildenden.Lageraufnahmen 48, so daß sich die in Figur 9 strichpunktiert - dieses entspricht der in Figur 1 angegeben, mit IX bezeichneten Einzelheit - eingezeichnete Betriebsstellung der Anschlußvorrichtung 14 ergibt, in welcher sich das Wischblatt 10 betriebssicher gehalten ist, weil die Gelenkzapfen 58 von den hakenartigen Verlängerungen 46 der U-Schenkel 34, 36 nach Art einer Hinterschneidung hintergriffen sind. Die Haarnadelschenkel 72 bis 78 bilden somit Federmittel, weil das Anschlußstück 20 mit seinen beiden einstückig mit diesem verbundenen Fortsätzen 66, 68 aus einem federelastischen Kunststoff hergestellt ist. In dieser nun erreichten Betriebsposition des Wischblatts 10 am Wischerarm 16 befindet sich die U-Basis 32 des Vorrichtungselements 24 auf der von der Scheibe abgewandten Seite des Anschlußstücks 20 und seine beiden U-Schenkel 34, 36 übergreifen führend die beiden mit den Gelenkzapfen 58 versehenen Längsseiten des Wischblatt-Anschlußstücks 20, ohne daß dadurch die Pendelbewegung des Wischblatts gegenüber dem Wischeram in den Gelenken 48, 58 beeinträchtig wird. Zum Lösen des Wischblatts 10 vom Wischerarm 16 genügt es ebenfalls die beiden Haarnadelschenkel 72 und 78 in Richtung der beiden Pfeile 92 zu belasten, bis die beiden Ergänzungszapfenteile 62 ihre in Figur 10 strichpunktiert dargestellte Position einnehmen. Danach kann das Wischblatt ohne Schwierigkeiten entgegen dem Richtungspfeil 96 vom Wischerarm gelöst werden. Diese oben beschriebene Ausführungsform der Erfindung ist besonders praxisnah und leicht zu handhaben.

Eine andere, in Figur 11 dargestellte Ausführungsform veranschaulicht insbesondere das Prinzip der erfindungsgemäßen Anschlußvorrichtung. Auch hier hat der Wischerarm 116 an seinem freien Ende eine Vorrichtungselement 124 das in seinem Aufbau dem Vorrichtungselement 24 nahe kommt und ebenfalls eine U-Basis 132 zwei mit Abstand voneinander und parallel zueinander liegende U-Schenkel 136 hat. Jeder der beiden U-Schenkel 136 ist - abweichend von der Ausführung gemäß den Figuren 2 und 8 - mit einer rundum geschlossenen Lagerbohrung 138 versehen, deren Bohrungsachsen miteinander fluchten. Das Wischblatt 110 ist in seinem Mittelabschnitt mit einem blockartigen Anschlußstück 120 versehen welches eine Querbohrung 140 aufweist. Diese Querbohrung 140 ist an ihren beiden Mündungen verengt. In der Querbohrung 140 sind zwei pilzartige Bauelemente 142 angeordnet, deren Pilzhüte 144 einander benachbart liegen und deren beiden Pilzfüße 146 durch die Engstellen der Querbohrung 140 hindurchragen und Gelenkzapfen bilden, deren Durchmesser auf die Durchmesser der Lagerbohrungen 138 abgestimmt ist. Zwischen den beiden Pilzhüten 144 ist in der Querbohrung 140 eine Schrauben-Druckfeder 148 vorgespannt angeordnet, so daß die Gelenkzapfen 146 die in Figur 11 dargestellten Positionen einnehmen. Um das Wischblatt 110 120 am Wischerarm 116 124 anzuschließen, müssen die beiden Gelenkzapfen 146 in Richtung der beiden Pfeile 150 so belastet werden, daß sie entgegen der Vorspannkraft der Schrauben-Druckfeder 148 auf einander zubewegt werden und zwar zumindest um das Maß der wirksamen Zapfenlänge 152. Danach kann das Wischblatt mit seinem blockartigen Anschlußstück 120 zwischen die U-Schenkel 136 des Vorrichtungselements 124 eingeführt werden, bis die gemeinsame Längsachse der beiden Gelenkzapfen 146 mit der gemeinsamen Längsachse der beiden Lagerbohrungen 138 fluchtet. Wenn danach die Belastungen Richtung der beiden Pfeile 150 entfällt drückt die vorgespannte Schrauben-Druckfeder 148 die beiden Gelenkzapfen 146 in ihre Lagerbohrungen 138 des Wischerarms so daß eine einfache, wirksame Gelenkverbindung zwischen Wischblatt und Wischerarm 116 erreicht ist.

Beiden Ausführungsbeispielen ist gemeinsam, daß jeder Gelenkzapfen 62 beziehungsweise 146 zumindest abschnittsweise (Ergänzungszapfenteil 62) gegen Federkraft wenigstens jeweils um das Maß der wirksamen Zapfenlänge 94 beziehungsweise 152 zum anderen Gelenkzapfen hin bewegbar und in die ihm zugeordnete Lagerausnehmung 48 beziehungsweise 138 einbringbar ist.

## Patentansprüche

1. Vorrichtung zum Verbinden eines Wischblatts für Scheiben von Kraftfahrzeugen mit einem an diesem geführten, zwischen Umkehrlagen bewegbaren, mit einem Vorrichtungselement versehenen Wischerarm, mit dessen Vorrichtungselement (24) das langgestreckte, mit einer Wischleiste (22) an der Scheibe anlegbare Wischblatt (10) über ein zu diesem gehörendes Anschlußstück (20) gelenkig verbunden ist, wobei aus jeder Längsseite des Wischblatts ein am Anschlußstück angeordneter Gelenkzapfen (58, 146) ragt, die gemeinsame Längsachse der beiden Gelenkzapfen quer zur Wischblatt-Längserstreckung in einer zur Scheibe beabstandeten Ebene liegt und jeder der beiden Gelenkzapfen in eine diesem zugeordnete, die wischerarmseitigen Gelenkmittel bildende Lagerausnehmung des Verbindungselements greift, **dadurch gekennzeichnet, daß** mindestens ein Gelenkzapfen zumindest abschnittsweise gegen Federkraft wenigstens um seine Zapfenlänge zum anderen Gelenkzapfen hin bewegbar und in die ihm zugeordnete Lagerausnehmung (48, 138) einbringbar ist.

2. Vorrichtung nach Anspruch 1, daß der mindestens eine Gelenkzapfen (58) längsgeteilt ist, daß das eine Zapfenteil (60) des mindestens einen Gelenkzapfens fest mit dem Anschlußstück (20) verbunden ist, daß das andere Zapfenteil (62) des mindestens einen Gelenkzapfens gegen Federkraft zumindest jeweils um das Maß der wirksamen Zapfenlänge (94) zum anderen Gelenkzapfen hin bewegbar ist und daß das anschlußstückfeste Gelenkzapfenteil (60) über einen randoffenen in die ihm zugeordnete Lagerausnehmung (48) mündenden Montagekanal (84) einbringbar ist, wobei die Breite (86) des Montagekanals auf die Breite (90) des einen Gelenkzapfenteils (60) abgestimmt ist.

3. Vorrichtung nach Anspruch 2, **dadurch gekennzeichnet, daß** bei in Betriebsstellung befindlichem Wischerarm (16) die zwischen dem einen Gelenkzapfenteil (60) und dem anderen Gelenkzapfenteil (62) vorhandene Trennfuge (82) zur Scheibe aufrecht angeordnet ist.

4. Vorrichtung nach einem der Ansprüche 2 oder 3, **dadurch gekennzeichnet, daß** die Trennfuge (82) außerhalb der Gelenkzapfen-Längsachse (88) angeordnet ist, daß das im Querschnitt größere Gelenkzapfenteil (60) fest mit dem Anschlußstück (20) verbunden und das im Querschnitt kleinere Gelenkzapfenteil (62) zumindest annähernd in Richtung der Zapfen-Längsachsen (88) federnd nachgiebig angeordnet ist.

5. Vorrichtung nach Anspruch 4, **dadurch gekennzeichnet, daß** das Anschlußstück (20) aus einem federelastischen Kunststoff gefertigt ist und daß an dem bei am Wischerarm angeschlossenen Wischblatt vom Wischerarm (16) abliegenden Ende (64) eines zum Anschlußstück (20) gehörenden die im Querschnitt größeren Gelenkzapfenteile (60) aufweisenden Basisteil die Federmittel (66, 68) angeordnet sind.

6. Vorrichtung nach Anspruch 5, **dadurch gekennzeichnet, daß** die Federmittel für jedes der kleineren Gelenkzapfenteile (62) durch je einen haarnadelförmigen Fortsatz (60, 68) des Anschlußstücks (20) gebildet sind, daß die beiden Fortsätze (60, 68) in einer gemeinsamen, mit Abstand von der Scheibe und annähernd parallel zu dieser befindlichen Ebene liegen, daß die einander benachbarten inneren Haarnadelschenkel (74, 76) der beiden Fortsätze (60, 68) mit ihren von dem jeweiligen Haarnadel-Scheitelbereich (80) abliegenden Enden fest mit dem Ende des Basisteils des Anschlußstücks verbunden sind und daß die im Querschnitt kleineren Gelenkzapfenteile (62) jeweils an einem der beiden gegen Federkraft frei bewegbaren äußeren Haarnadelschenkeln (72, 78) der beiden Fortsätze angeordnet sind.

7. Vorrichtung nach einem der Ansprüche 2 bis 6, **dadurch gekennzeichnet, daß** das Vorrichtungselement (24) des Wischerarms (16) einen U-förmigen Querschnitt hat, dessen U-Basis (32) bei angeschlossenem Wischblatt sich auf der von der Scheibe abgewandten Seite des Anschlußstücks (20) befindet, daß die beiden U-Schenkel (34, 36) des Vorrichtungselements (24) die beiden Längsseiten des Wischblatt-Anschlußstücks (20) passend übergreifen und daß jeder U-Schenkel eine Lagerausnehmung (48) für einen Gelenkzapfen (58) hat.

8. Vorrichtung nach Anspruch 7, **dadurch gekennzeichnet, daß** der Montagekanal (84) einer jeden Lagerausnehmung (48) zur Scheibe hin offen ist.

9. Vorrichtung nach Anspruch 8, **dadurch gekennzeichnet, daß** bei angeschlossenem Wischblatt (10) die jeweils vom Wischerarm (16) abliegenden Lagerausnehmungswände die Gelenkzapfen (58) hakenartig untergreifen.

10. Vorrichtung nach einem der Ansprüche 7 bis 9, **dadurch gekennzeichnet, daß** die U-Basis des Vorrichtungselements (24) mit einer seitlichen, im Querschnitt L-förmigen Verbreiterung (38) versehen ist, deren einer L-Schenkel (40) durch eine Fortführung der U-Basis (32) gebildet ist und der andere L-Schenkel (42) mit Abstand von dem einen U-Schenkel (34) des Vorrichtungselements (24) und parallel zu diesem angeordnet ist.

## Claims

1. Device for connecting a wiper blade for windows of motor vehicles to a wiper arm, which is guided on the said wiper blade, can be moved between reversal positions and is provided with a device element, with the elongate wiper blade (10), which can be placed with a wiper strip (22) against the window, being connected in an articulated manner to the device element (24) of the said wiper arm via a joining piece (20) belonging to the said wiper blade, a joint pin (58, 146), which is arranged on the joining piece, protruding from each longitudinal side of the wiper blade, the common longitudinal axis of the two joint pins being situated transversely to the wiper-blade longitudinal extent in a plane spaced apart from the window, and each of the two joint pins reaching into a bearing recess of the connecting element, which recess is assigned to the joint pin and forms the joint means on the wiper-arm side, **characterized in that** at least one joint pin can be moved at least in some sections counter to spring force at least by its pin length towards the other joint pin and can be introduced into the bearing recess (48, 138) assigned to it.

2. Device according to Claim 1, **characterized in that** the at least one joint pin (58) is divided longitudinally, **in that** the one pin part (60) of the at least one joint pin is connected fixedly to the joining piece (20), **in that** the other pin part (62) of the at least one joint pin can be moved counter to spring force at least in each case by the extent of the effective pin length (94) towards the other joint pin, and **in that** the joint-pin part (60) which is fixed on the joining piece can be introduced via an installation channel (84) which is open at the edge and leads into the bearing recess (48) assigned to the said joint-pin part, the width (86) of the installation channel being matched to the width (90) of the one joint-pin part (60).

3. Device according to Claim 2, **characterized in that** when the wiper arm (16) is in the operational position, the separating joint (82) present between the one joint-pin part (60) and the other joint-pin part (62) is arranged perpendicular with respect to the window.

4. Device according to either of Claims 2 and 3, **characterized in that** the separating joint (82) is arranged outside the joint-pin longitudinal axis (88), **in that** the joint-pin part (60) which is larger in cross section is connected fixedly to the joining piece (20) and the joint-pin part (62) which is smaller in cross section is arranged in a resiliently flexible manner at least approximately in the direction of the pin longitudinal axes (88).

5. Device according to Claim 4, **characterized in that** the joining piece (20) is manufactured from an elastomeric plastic, and **in that** the spring means (66, 68) are arranged at that end (64) which is remote from the wiper arm (16), when the wiper blade is connected to the wiper arm, of a base part which belongs to the joining piece (20) and has the joint-pin parts (60) of larger cross section.

6. Device according to Claim 5, **characterized in that** the spring means for each of the smaller joint-pin parts (62) are formed by a respective hairpin-shaped extension (60, 68) of the joining piece (20), **in that** the two extensions (60, 68) lie in a common plane, which is situated at a distance from the window and approximately parallel thereto, **in that** the mutually adjacent, inner hairpin limbs (74, 76) of the two extensions (60, 68) are connected, by means of their ends which are remote from the particular hairpin apex region (80), fixedly to the end of the base part of the joining piece, and **in that** the joint-pin parts (62) of smaller cross section are arranged in each case on one of the two outer hairpin limbs (72, 78) of the two extensions, which hairpin limbs can be moved freely counter to spring force.

7. Device according to one of Claims 2 to 6, **characterized in that** the device element (24) of the wiper arm (16) has a U-shaped cross section, the U-base (32) of which is situated, when the wiper blade is connected, on that side of the joining piece (20) which faces away from the window, **in that** the two U-limbs (34, 36) of the device element (24) engage in a fitting manner over the two longitudinal sides of the wiper-blade joining piece (20), and **in that** each U-limb has a bearing recess (48) for a joint pin (58).

8. Device according to Claim 7, **characterized in that** the installation channel (84) of each bearing recess (48) is open towards the window.

9. Device according to Claim 8, **characterized in that** when the wiper blade (10) is connected, the bearing-recess walls which are remote in each case from the wiper arm (16) engage under the joint pins (58) in the manner of hooks.

10. Device according to one of Claims 7 to 9, **characterized in that** the U-base of the device element (24) is provided with a lateral enlargement (38) which is L-shaped in cross section and the one L-limb (40) of which is formed by a continuation of the U-base (32) and the other L-limb (42) is arranged at a distance from the one U-limb (34) of the device element (24) and parallel thereto.

## Revendications

1. Dispositif pour relier une raclette d'essuie-glace destinée à des vitres de véhicule automobile, comportant un bras d'essuie-glace guidé sur celle-ci, mobile entre des positions d'inversion et muni d'un élément de monture (24), et dont la raclette d'essuie-glace (10) allongée qui peut être appliquée contre la vitre par une barrette d'essuie-glace (22) est reliée par articulation à l'élément de monture (24) du bras d'essuie-glace au moyen d'une pièce de raccordement (20) qui en fait partie, dont un pivot (58, 146) disposé sur la pièce de raccordement dépasse alors de chaque grand côté de la raclette d'essuie-glace, l'axe longitudinal commun aux deux pivots perpendiculaires à l'extension longitudinale de la raclette d'essuie-glace et dans un plan situé à distance de la vitre, alors que chacun des deux pivots a prise dans une cavité de positionnement associée à celui-ci et qui forme le moyen d'articulation côté bras d'essuie-glace,
**caractérisé en ce qu'**
au moins un pivot peut être déplacé vers l'autre pivot au moins par segment contre une force élastique au moins de sa longueur de pivot, et peut être introduit dans la cavité de positionnement (48, 138) qui lui est associée.

2. Dispositif selon la revendication 1, **caractérisé en ce que**
l'au moins un pivot (58) est divisé en longueur, l'une des parties (60) de cet au moins un pivot est liée solidairement à la pièce de raccordement (20), l'autre partie (62) de ce pivot peut être déplacée vers l'autre pivot de la valeur de la longueur efficace de pivot (94), et la partie de pivot (60) solidaire de la pièce de raccordement peut être introduite au moyen d'un canal de montage (84) ouvert sur les bords et débouchant dans la cavité de positionnement (48) qui lui est associée, la largeur (86) du canal de montage étant ajustée à la largeur (90) de l'une des parties de pivot (60).

3. Dispositif selon la revendication 2,
**caractérisé en ce que**
le joint de séparation (82) qui existe entre l'une des parties de pivot (60) et l'autre partie de pivot (62) est disposé perpendiculairement à la vitre lorsque le bras d'essuie-glace (16) se trouve en position de fonctionnement.

4. Dispositif selon l'une des revendications 2 ou 3,
**caractérisé en ce que**
le joint de séparation (82) est disposé à l'extérieur de l'axe longitudinal (88) du pivot, la partie de pivot (60) dont la section transversale est la plus grande est solidairement reliée à la pièce de raccordement (20), et la partie de pivot (62) de section transversale plus petite est au moins approximativement flexible et élastique en direction de l'axe longitudinal (88) du pivot.

5. Dispositif selon la revendication 4,
**caractérisé en ce que**
la pièce de raccordement (20) est fabriquée en un matériau synthétique élastique et les moyens élastiques (66, 68) sont disposés à l'extrémité (64) d'une partie de base éloignée du bras d'essuie-glace (16) lorsque la raclette d'essuie-glace est raccordée au bras d'essuie-glace, partie de base qui fait partie de la pièce de raccordement (20) et qui présente les parties de pivot (60) de section transversale plus grande.

6. Dispositif selon la revendication 5,
**caractérisé en ce que**
les moyens élastiques destinés à chacune des parties de pivot (62) les plus petites sont respectivement formés par un prolongement (60, 68) en épingle à cheveux de la pièce de raccordement (20), les deux prolongements (60, 68) se trouvent dans un plan commun situé à distance de la vitre et approximativement parallèle à celle-ci, les branches intérieures de l'épingle à cheveux (74, 76) voisines l'une de l'autre des deux prolongements (60, 68) sont reliées solidairement à l'extrémité de la partie de base de la pièce de raccordement par leurs extrémités qui s'écartent de la zone de sommet concernée en épingle à cheveux, et les parties de pivot (62) de section transversale plus petite sont respectivement disposées sur l'un des deux montants extérieurs de l'épingle à cheveux (72, 78) et mobiles librement contre une force élastique des deux prolongements.

7. Dispositif selon l'une des revendications 2 à 6,
**caractérisé en ce que**
l'élément de monture (24) du bras d'essuie-glace (16) a une section transversale en U dont la base en U (32) se trouve sur le côté opposé à la vitre de la pièce de raccordement (20) lorsque la raclette d'essuie-glace est raccordée, les deux montants en U (34, 36) de l'élément de monture (24) passent de façon ajustée par-dessus les deux grands côtés de la pièce de raccordement (20) de la raclette d'essuie-glace, et chaque montant en U a une cavité de positionnement (48) destinée à un pivot (58).

8. Dispositif selon la revendication 7,
**caractérisé en ce que**
le canal de montage (84) de chacune des cavités de positionnement (48) est ouvert vers la vitre.

9. Dispositif selon la revendication 8,
**caractérisé en ce que**
les parois de cavité de positionnement éloignées du bras d'essuie-glace (16) passent par-dessous les pivots (58) à la manière d'un crochet lorsque la raclette d'essuie-glace (10) est raccordée.

10. Dispositif selon l'une des revendications 7 à 9,
**caractérisé en ce que**
la base en U de l'élément de monture (24) est munie d'un élargissement (38) latéral, à section transversale en forme de L, dont l'un des montants en L (40) est formé par une continuation de la base en U (32), et l'autre montant en L (42) est disposé à distance du montant en U (34) de l'élément de monture (24) et parallèlement à celui-ci.
